(19) Europäisches Patentamt
European Patent Office
Office européen des brevets

(11) **EP 3 532 702 B1**

(12) **EUROPEAN PATENT SPECIFICATION**

(45) Date of publication and mention
of the grant of the patent:
**28.09.2022   Bulletin 2022/39**

(21) Application number: **17754901.1**

(22) Date of filing: **07.08.2017**

(51) International Patent Classification (IPC):
**E21B 47/00** (2012.01)      **G01F 15/00** (2006.01)
**E21B 47/10** (2012.01)      G01F 1/74 (2006.01)

(52) Cooperative Patent Classification (CPC):
**E21B 47/10;** G01F 1/74; G01F 15/00

(86) International application number:
**PCT/US2017/045664**

(87) International publication number:
**WO 2018/052567 (22.03.2018 Gazette 2018/12)**

(54) **ESTIMATION APPROACH FOR USE WITH A VIRTUAL FLOW METER**

SCHÄTZUNGSANSATZ ZUR VERWENDUNG MIT EINEM VIRTUELLEN DURCHFLUSSMESSER

APPROCHE D'ESTIMATION DESTINÉE À ÊTRE UTILISÉE AVEC UN DÉBITMÈTRE VIRTUEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **14.09.2016   US 201615265585**

(43) Date of publication of application:
**04.09.2019   Bulletin 2019/36**

(73) Proprietor: **General Electric Company**
**Schenectady, NY 12345 (US)**

(72) Inventors:
• **PAROLINI, Luca**
**85748 Bayern (DE)**
• **THOMAS, Valentin, Patrick**
**Niskayuna**
**NY 12309 (US)**
• **GOMEZ, Maria, Gabriela**
**85748 Bayern (DE)**

(74) Representative: **Novagraaf Group**
**Chemin de l'Echo 3**
**1213 Onex/ Geneva (CH)**

(56) References cited:
US-A1- 2007 118 346      US-A1- 2007 118 346
US-A1- 2008 234 939      US-A1- 2008 234 939
US-A1- 2012 215 502      US-A1- 2015 234 880
US-A1- 2015 234 880

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

The subject matter disclosed herein relates to the use of virtual flow metering using filtering (e.g., linear filtering) in resource production contexts, such as oil and gas production.

US 2007/118346 A1 discloses updating a real-time reservoir model using ensemble Kalman filters.

In various contexts where a fluid medium, either liquid or gas, is flowed between various locations, the control of the flow may be controlled at least in part using measured flow aspects. Various types of flow meters may be provided at various states in the flow to provide data on the flow of the fluid at a given time and at a given location. By way of example, in a hydrocarbon production context, flow meters may measure flow at one or more locations in the production path to provide data on the flow of the production fluid through various parts of the production system.

By way of example, two types of flow meter technologies are physical flow meters and virtual flow meters. In the context of physical multiphase flow meters, these flow meters typically estimate the flow rate of each phase in question by utilizing a combination of techniques, which may each in turn utilize various electronic sensing devices, such as microwave sensors, electrical impedance sensors, doppler ultrasound sensors, gamma ray sensors, and so forth.

There may be various drawbacks associated with the use of physical flow meters, including cost (since expensive sensors are typically employed), reliability (since complex sensors are typically more susceptible to failure), communication and power supply issues (e.g., high power consumption to keep sensors working demands specific umbilical pipes), and precision and accuracy (generally, physical flow meters presents high measurement errors due to the complexity of a multiphase flow).

Virtual flow meters may also utilize various sensor systems and algorithms for estimating flow rates. However, virtual flow meters typically make use of less complex types of sensors (e.g. temperature and pressure sensors) from whose measurements flow data is extrapolated. Both the physical and virtual flow metering approaches typically utilize complex data-fusion algorithms for estimating flow rates based on the measurements provided by the sensing units. However, in many instances a given estimation algorithm may be too inaccurate, failing to provide useful or usable estimated measurements (e.g., flow) relative to the actual values. For example, the lack of accuracy in a virtual flow meter algorithm may render such an algorithm unusable in a production context.

BRIEF DESCRIPTION

The present invention is defined in the accompanying claims.

BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:

FIG. 1 depicts a generalized view of a resource production system suitable for use with a virtual flow metering algorithm, in accordance with aspects of the present disclosure; and

FIG. 2 depicts an example of a fluid gathering network, in accordance with aspects of the present disclosure.

DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions are made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The terms "comprising," "including," and "having" are intended to be inclusive and mean that there may be additional elements other than the listed elements.

As discussed herein, approaches for a modeling and estimation approach for a virtual flow meter (VFM) are described. The virtual flow meter algorithm may, in certain embodiments, be capable of tuning models at run-time.

Implementations of these approaches may be employed in resource production (e.g., oil and gas production) in various contexts, including subsea production and/or on-shore production.

Certain aspects of the present virtual flow meter approaches relate to the manner in which multiple sources of information in the field are merged within a Kalman filter framework (or other suitable framework) for estimation. In contrast to other approaches, both mass flow and pressure at every node of the field are considered as part of the estimated state. As discussed in greater detail below, a filtering algorithm is employed that allows the use of information such as inflow performance relationships (IPR), pressure continuity at junction points, and mass flow continuity within the estimation framework. In accordance with such implementations, a higher accuracy of the virtual flow meter may be achieved. The algorithm may be implemented recursively and may be easier to implement and tune than other approaches based, for example, on optimization.

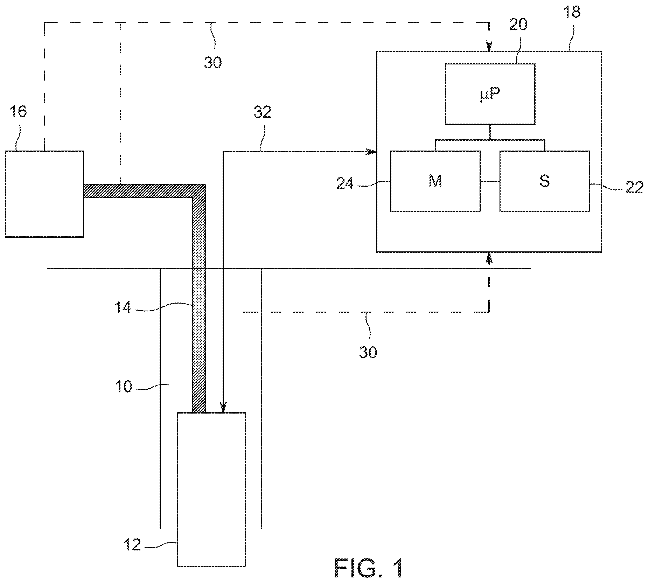

With the preceding in mind, a high-level, simplified overview of aspects of a production site and control system employing a virtual flow meter are shown in FIG. 1. In this example, a hydrocarbon production site is depicted. Such a site may be subsea or on-shore. In this example, the site includes a downhole environment (e.g., a wellbore 10) in which a downhole tool 12 is positioned. The downhole tool 12 may include one or more pumps, such as electric submersible pumps (ESPs), that facilitate the movement of a production fluid 14 from the downhole environment to a downstream facility 16, such as storage tanks, separators or separation tanks, and so forth.

In the depicted example, the flow of the production fluid 14 may be controlled at least in part by the operation of the downhole tool 12 or, in alternative approaches by changing the opening of choke valves located in production manifolds, Xmas trees, a topside separator, or other flow diversion or restriction locations in the production flow path. With reference to the depicted example, the operation of the downhole tool 12 is, in this example, controlled at least in part by the operation of a controller 18 configured to implement a virtual flow meter as discussed herein. Though the downhole tool 12 in this example is depicted as being in communication with, and operated based on, the controller 18, it should be appreciated that other pumps or flow control devices may be operated based on the controller 18 in addition to or instead of the downhole tool 12. For example, the controller 18 (or other similarly configured controllers 18 at the site) may control other devices or components that cause the flow of the production fluid 14 between locations at the monitored site.

In the depicted embodiment, the controller 18 is a processor-based controller, having at least one microprocessor 20 to execute an algorithm corresponding to a virtual flow meter. For example, the microprocessor 20 may execute stored routines corresponding to the virtual flow meter algorithm stored in a storage 22 and/or memory 24 of the controller 18. The processor 20 may also access sensor data 30 acquired from one or more sensor (e.g., pressure and/or temperature sensors, and/or flow rates of gas, oil, and/or water measured using multiphase flow meters) located at locations (as shown by dashed lines 30) in the fluid flow path or via the storage 22 and/or memory. In the same manner, in certain embodiments sensor and/or operational data may be provided to the controller 18 a tool 12 responsible for the flow of the production fluid 14. Though the controller 18 is depicted in FIG. 1 as a stand-alone or specially programmed device, it should be understood that the functionality the controller 18 (e.g., executing routines for implementing a virtual flow meter algorithm) may be one set of routines executed on a computer or other processor-based system that, in addition, executes other routines and performs other functions. Further, though a processor-based implementation is shown in FIG. 1, in alternative implementations the controller 18 may be implemented as one or more application-specific integrated circuits specifically programmed to perform the routines associated with the virtual flow meter described herein when provided with the proper inputs.

In the depicted example, the controller 18 receives sensor input data and acts as virtual flow meter, generating an estimate of the flow of the production fluid 14 at one or more locations in the monitored site. The flow estimates in the depicted example may be used to generate a control signal 32 used to control the operation of one or more flow controlling devices, such as pumps, valves, and so forth. In the depicted example, the control signal 32 is used to control operation of the downhole tool 12, such as an electrical submersible pump or other pumping device. In this manner, based on the flow estimated by the virtual flow meter implemented on controller 18, the operation of one or more flow controlling devices may be controlled so as to stay within desired production parameters.

With the preceding context in mind, the present approach relates to the manner in which multiple sources of information in the field are merged within a common framework that allows a state space representation of the hydrocarbon production site. Such a representation then, allows the user to select a technique, e.g., the extended Kalman filter, for solving the estimation problem. As used herein, a state space representation is understood to correspond to a set of equations for which three kind of variables can be defined: input, state, and output and whose relationships can be written as:

$$(1) \qquad x(k+1) = f\big(x(k), u(k)\big)$$

$$(2) \qquad y(k) = h(x(k), u(k))$$

where $k$ is an integer variable denoting indexes of time intervals, $u(k)$ represents the input to the system, $y(k)$ represents the output of the system, and $x(k)$ is the state of the system, i.e., an aggregate of internal variables of the system. The functions $f$ and $h$ define the relationships between input, state, and output over time. In some state space representations, such as those considered in the proposed approach, the input $u(k)$ is missing and the output of the system depends on the values of the state vector only.

The estimation approach can be implemented in a recursive fashion allowing minimal computational resources to be required by the algorithm such as those typically found in existing oil fields.

The present approach focuses on stationary models which consider the case where mass flow rates and pressure are constant, or slowly varying. In this case, the problem of estimating mass flow rates from pressure measurement can be restated as the problem of inverting an algebraic relationship between mass flow rates and pressure values. A pure inversion of an algebraic relationship poses limits on the number of unknown elements that can be estimated. The proposed approach circumvents such a limitation by adding pseudo-measurements which model additional relationships among measured variables, or inter-relationships among different models used to represent the interaction between mass flow rates and pressure in the system.

Since a state-space form is used for describing the system, a dynamic equation which models how mass flow and pressure are expected to change over time can be included in the model. Including such a dynamic equation facilitates the capture of the available knowledge about the system, allowing more accurate estimators to be derived.

To facilitate explanation of the present approach, a generalized example of a suitable model is provided. As may be appreciated, the present model description is provided merely as a useful explanatory example and to provide context, and is not intended to limit the present approach.

With this in mind, a suitable model related to a hydrocarbon production context may relate to a fluid-gathering-network composed of N wells, such as wells producing multiphase fluids. In the present example the focus is on wells that produce oil, water, and gas, however other compositions such as liquid and gas, or sand, or even single phase fluids can be considered. In such a case, the specific notation may be adapted, but the modeling and estimation approaches remain unchanged.

Turning to the model description, $m_i^o(t)$ denotes the mass flow rate of an oil phase generated by the $i^{th}$ well at time t. The mass flow rates of the water and gas phases are correspondingly denoted as $m_i^w(t)$ and $m_i^g(t)$ respectively. The vector:

$$(3) \qquad m_i(t) = \left[ m_i^o(t)\ m_i^w(t)\ m_i^g(t) \right]^T$$

represents the flow rates of the aggregate phases of the $i^{th}$ well.

Vectors $\{[m_i(t)]\}$ represent mass flow rates at fixed temperature and pressure values. In this case, when fluids from different wells combine, mass transfer between the phases does not need to be considered and the resulting fluid is obtained by simply summing the vectors.

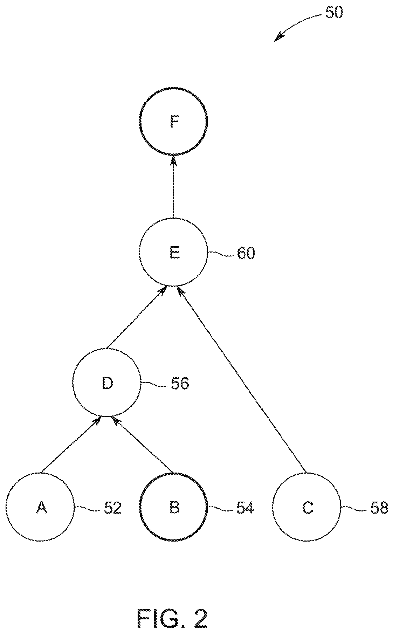

With the preceding in mind, FIG. 2 shows an example of a fluid-gathering network 50. In the network 50, fluids from wells B (circle 54) and A (circle 52) mix at node D (circle 56). This can be written as:

$$(4) \qquad m_D(t) = m_A(t) + m_B(t).$$

Similarly, fluids from well C (circle 58) and from node D (circle 56) mix at node E (circle 60), which can be written as:

$$(5) \qquad m_E(t) = m_D(t) + m_C(t) = m_A(t) + m_B(t) + m_C(t).$$

The present discussion focuses on networks that can be modeled as trees. If topologies other than trees are considered, then algebraic relationships between the vectors $\{m_i(t)\}$ may be taken into account. However, the proposed modeling and estimation framework can still support those cases.

In one implementation, pressure is measured at every node, with $M$ denoting the number of nodes in the network 50 (shown in FIG. 2). Other measurements such as temperature and/or fluid rates at node locations may also be available and easily incorporated in the proposed framework. In FIG. 2 the variable *M* is equal to 6, whereas *N* is equal to 3. That is, there are 3 wells represented in FIG. 2 and 6 measurement nodes in the connecting network.

The relationship between mass flow rates from each of the well and the pressure values measured at the *M* points is obtained by combining local models of the key components of the production site. For example, every choke can be associated with a certain model that relates how the mass flow rates and pressure at its inlet and at its outlet are related. Known models are for example Sachdeva's or Perkins' models. Models can consider more parameters than just mass flow and pressure at the inlet. For example, pipe models may depend on the geometry of the pipe as well as roughness of the internal surface. Temperature values at the inlet and outlet can also be considered. These models are known in industry and for each component the most suitable one can be selected.

The present approach considers the case where each relevant element of the production system is associated with a model that describes the relationship between the mass flow rate at fixed pressure and temperature value that passes through the element and the value of pressure at the inlet and outlet of the element. The class models used to represent the relationship between mass flow rates and pressure at inlet and outlet of components of the production site are referred to herein as "Pressure Loss Models".

Pressure Loss Segments - Elements such as pipes and chokes connect the network nodes *M* with each other. While flowing through these elements the fluid (e.g., production fluid 14) undergoes a reduction in pressure. Thus, these elements are referred to herein as pressure loss segments (PLSs). In FIG. 2, pressure loss segments are represented by the arrows connecting the nodes *M*. Pressure loss segments are numbered herein based on their inlet node designator. For example, the pressure loss segment connecting node A with node D may be referenced herein as pressure loss segment A (i.e., PLS A).

It is assumed for the present discussion that these models can be rewritten so that the outlet pressure of the pressure loss segment is function of its inlet pressure, the mass flow of the fluid moving through the pressure loss segment, and other parameters specific to the model. For every pressure loss segment therefore, it is assumed that the outlet pressure for the segment can be written as:

$$(6) \qquad P_i^{out}(t) = f_i\left(m_i(t), P_i^{in}(t), \theta_i(t)\right)$$

where i is the index of the pressure loss segment, $P_i^{out}(t)$ and $P_i^{in}(t)$ represent its outlet and inlet pressure respectively, the vector $m_i(t)$ represents the multi-phase fluid moving through the pressure loss segment, and $\theta_i(t)$ are the set of specific parameters of the model.

At run-time the pressure loss models can be chained together so that the outlet pressure of a model becomes the inlet pressure of the adjacent element. The specific topology of the production network defines how inlet and outlet pressure can be mapped from one PLS to the other. With respect to FIG. 2 the outlet of the pressure loss segment C equals the inlet of the pressure loss segment E.

The model of the production system can be summarized by two sets of equations: (i) a set of equation that describes how mass flow mixes in the production system and (ii) a set of equations that describes how outlet pressure values are related with inlet pressure values and mass flow rates. Other variables such as temperature values can also be included. With respect to FIG. 2, these equations can be written as

$$(7) \quad 1: m_A(t) + m_B(t) = m_D(t); \; m_A(t) + m_B(t) = m_D(t); \; m_D(t) + m_C(t) = m_E(t); m_E(t) = m_F(t)$$

$$2: P_A^{out} = f_A\left(m_A(t), P_A^{in}(t), \theta_A(t)\right); \; P_B^{out} = f_B\left(m_B(t), P_B^{in}(t), \theta_B(t)\right);$$

$$P_C^{out} = f_C\left(m_C(t), P_C^{in}(t), \theta_C(t)\right); \; P_D^{out} = f_D\left(m_D(t), P_D^{in}(t), \theta_D(t)\right);$$

$$\dots$$

$$P_E^{out} = f_E\left(m_E(t), P_E^{in}(t), \theta_E(t)\right)$$

These equations can be rewritten in a state-space form. Toward this goal, a vector is defined corresponding to the state. In accordance with the present approach the case is considered where all mass flow rates from each of the wells and every pressure value at nodal points are included in the state vector. The state vector is denoted herein as x and it incorporates the mass flow and the pressure value at every node *M*. This can be written as:

$$(8) \quad x(t) = [m_A(t)^T, \dots, m_N(t)^T, P_A(t), \dots, P_M(t)]^T$$

where the symbol T denotes the transposed operator and it is used to align correctly the elements of the mass flow vectors. The state vector *x(t)* comprises 3*N* + *M* elements.

The set of equation (4) related with outlet pressure can now be written in a more compact form as

$$(9) \quad P^{out}(t) = G\left(x(t)\right),$$

where the variable *P^out(t)* is a vector that collects all of the relevant output pressure values.

Equation (9) defines an algebraic relationship between outlet pressure values, mass flow rates, and inlet pressure values. In its current form the state x(t) can be reconstructed from *P^out(t)* only if *P^out(t)* has dimension greater than or equal to x(t). Given that pressure values at every nodal point is included in the vector x(t), the vector *P^out(t)* has typically dimension lower than x(t) and hence, such an inversion is not possible.

Pseudo-measurements. Multiple elements of the vector *P^out(t)* refer to the same node in the network 50. For example, with respect to FIG. 2, $P_A^{out}(t)$ and $P_B^{out}(t)$ both refer to the pressure value at node D (circle 56) and can be written as:

$$(10) \quad P_A^{out}(t) - P_D(t) = 0$$

$$P_B^{out}(t) - P_D(t) = 0$$

We can use this set of equation in order to increase the dimension of *P^out(t)*. On the one hand this approach mitigates the problems of lower dimensionality of *P^out(t)* with respect to x(t). On the other hand, it allows the inclusion of additional information in the model about equality constraints of pressure at nodal points.

In considering a discrete-time representation of the system, the variable k is used to denote the initial time instant of the *k^th* time interval. The set of constraints and of equation (9) can be written as:

$$(11) \qquad P^{out}(k) = G\big(x(k)\big),$$

$$H\big(P^{out}(k), x(k)\big) = 0$$

Dynamic-equation: An equation that models how values of mass flow rates and pressure affect each other values over time can also be included. Such an equation can be written as

$$(12) \qquad x(k + 1) = F\big(x(k)\big)$$

For example, reservoir models or inflow performance relationships can be included in (12).

State-space representation. The production system can now be rewritten as

$$(13) \qquad x(k + 1) = F\big(x(k)\big)$$

$$P^{out}(k) = G\big(x(k)\big),$$

$$H\big(P^{out}(k), x(k)\big) = 0$$

The first set of equations describes the evolution of mass flow rates and pressure values over time. These are the dynamics equations of the system. In case no explicit dynamics equations are available, the relationship x(k+1)=x(k) can be considered. Such a relationship describes the case where mass flow rates and pressure values are assumed to remain constant over time. The equation $P^{out}(k) = G(x(k))$ includes the information about how pressure changes as the fluid moves from inlet to outlet of each of the components of the production system. Standard industrial models can be incorporated within the function G. Finally, equation $H(P^{out}(k),x(k)) = 0$ represents additional constraints on the system, such as equality pressure at nodal points. When additional models are considered which, for example, describe the relationship between mass flow rates, pressure, and temperatures, then these models can be included as part of the function G.

The set of equation in (13) can be rewritten in a form that highlight the set of measured variables and the set of pseudo-measurements as follows:

$$(14) \qquad x(k + 1) = F\big(x(k)\big)$$

$$y_{measured}(k) = G^1\big(x(k)\big),$$

$$y_{pseudo}(k) = H^1\big(y_{measured}(k), x(k)\big)$$

In this form the vector $P^{out}(k)$ has been replaced by the more generic vector $y_{measured}(k)$ which contains all of the variables directly measured in the system. Such a vector can contain the whole vector $P^{out}(k)$, or just a subset of it along with additional variables such as mass flow rates, or temperature values. The function $G^1$ can be constructed similarly to the function G and represents the so-called output function. The vector $y_{pseudo}(k)$ represents the vector of pseudo measurements. These measurements are not taken from real sensors. Their value is constant and typically set to 0 as defined above by the function H. The function $H^1$ defines the equality constraints relevant for the system.

The set of equation in (14) describes the production system in a form that can be directly used for deriving estimators based on well-known approaches such as the extended Kalman Filter. In such a form, a clear definition of state, output, and pseudo-measurement is defined. Furthermore, complex system-level models are defined at run-time starting from simpler industrial-standard models for components of the overall system.

Technical effects of the invention include higher accuracy of virtual flow meters without increasing their complexity. The proposed algorithm can be deployed on existing hardware, without requiring massive computational power. In addition, technical effects also include improved accuracy of the virtual flow meter, allowing better control the oil field by, e.g., injecting less chemicals in the system, or extracting more oil over time (increase the recovery of the field). A more accurate virtual flow meter supports increasing extraction from oil field and reducing management costs.

This written description uses examples to disclose the invention, including the best mode, and also to enable any person skilled in the art to practice the invention, including making and using any devices or systems and performing any incorporated methods. The patentable scope of the invention is defined by the appended claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A virtual flow meter, comprising:
   a processor-based controller (18) configured to:

   generate or access one or more vectors representing mass flow rates of one or more fluids through a fluid-gathering network (50), wherein the fluid-gathering network (50) comprises one or more wells (A, B, C);
   acquire measured pressure values for one or more nodes (A, B, C, D, E, F) within the fluid gathering network (50), wherein the number of nodes is greater than the number of wells;
   determine a state vector comprising the mass flow rates and pressure values at each node;
   generate a measurement vector based at least in part on the state vector; and
   generate a discrete time representation of the fluid gathering network (50) based on at least the state vector, the measurement vector, and one or more pseudo-measurements corresponding to physical constraints in the fluid-gathering network (50) and which model inter-relationships among different models used to represent the interaction between mass flow rates and pressure in the fluid-gathering network (50);
   wherein the one or more pseudo-measurements increase a dimensionality of a vector that collects all of the relevant output pressure values to enable determination of the state vector.

2. The virtual flow meter of claim 1, wherein the controller (18) comprises a processor based-controller.

3. The virtual flow meter of claim 1, wherein the controller (18) comprises an application specific integrated circuit.

4. The virtual flow meter of claim 1, wherein the controller (18) is further configured to acquire one or both of temperature measurements or fluid rate measurements.

5. The virtual flow meter of claim 1, wherein the one or more pseudo measurements comprise equality of pressure at the one or more nodes.

6. The virtual flow meter of claim 1, wherein the controller (18) is further configured to model pressure loss at one or more pressure loss segments between the nodes.

7. The virtual flow meter of claim 6, wherein the pressure loss at each pressure loss segment is modeled such that an outlet pressure for a respective pressure loss segment is a function at least of an inlet pressure for the respective pressure loss segment and a mass flow of fluid traveling through the respective pressure loss segment.

8. The virtual flow meter of claim 1, wherein the state vector, the measurement vector, and one or more pseudo-measurements are processed using a Kalman filter to generate an output signal used to regulate flow within the fluid-gathering network (50).

9. The virtual flow meter of claim 8, wherein the Kalman filter takes into account one or more of inflow performance relationships, pressure continuity at junction points, or mass flow continuity within the estimation framework.

10. A method for monitoring a fluid gathering network (50), the method comprising:

    generating or accessing one or more vectors representing mass flow rates of one or more fluids through a fluid-gathering network (50), wherein the fluid-gathering network (50) comprises one or more wells (A, B, C);
    acquiring measured pressure values for one or more nodes (A, B, C, D, E, F) within the fluid gathering network (50), wherein the number of nodes is greater than the number of wells;

determining a state vector comprising the mass flow rates and pressure values at each node;
generating a measurement vector based at least in part on the state vector; and
generating a discrete time representation of the fluid gathering network (50) based on at least the state vector, the measurement vector, and one or more pseudo-measurements corresponding to physical constraints in the fluid-gathering network (50) and which model inter-relationships among different models used to represent the interaction between mass flow rates and pressure in the fluid-gathering network (50);
wherein the one or more pseudo-measurements increase a dimensionality of a vector that collects all of the relevant output pressure values to enable determination of the state vector.

11. The method of claim 10, further comprising acquiring one or both of temperature measurements or fluid rate measurements.

12. The method of claim 10, wherein the one or more pseudo measurements comprise equality of pressure at the one or more nodes.

13. The method of claim 10, further comprising modeling pressure loss at one or more pressure loss segments between the nodes.

14. The method of claim 13, wherein the pressure loss at each pressure loss segment is modeled such that an outlet pressure for a respective pressure loss segment is a function at least of an inlet pressure for the respective pressure loss segment and a mass flow of fluid traveling through the respective pressure loss segment.

15. One or more computer-readable media comprising executable routines, which when executed by a processor of a controller in a virtual flow meter according to any one of claims 1-9 cause the method steps of any one of claims 10 to 14 to be performed

**Patentansprüche**

1. Virtueller Durchsatzmesser, umfassend:
eine prozessorbasierte Steuerung (18), die konfiguriert ist zum:

Erzeugen oder Abrufen eines oder mehrerer Vektoren, die Massendurchsätze eines oder mehrerer Fluide durch ein Fluidsammelnetz (50) darstellen, wobei das Fluidsammelnetz (50) eine oder mehrere Quellen (A, B, C) umfasst;
Erfassen von gemessenen Druckwerten für einen oder mehrere Netzknoten (A, B, C, D, E, F) innerhalb des Fluidsammelnetzes (50), wobei die Anzahl von Netzknoten größer als die Anzahl von Quellen ist;
Bestimmen eines Zustandsvektors, der die Durchsätze und Druckwerte an jedem Netzknoten umfasst;
Erzeugen eines Messvektors, zumindest teilweise auf Basis des Zustandsvektors; und
Erzeugen einer diskreten Zeitdarstellung des Fluidsammelnetzes (50), zumindest teilweise auf Basis des Zustandsvektors,
des Messvektors und einer oder mehrerer Pseudomessungen,
die physikalischen Zwängen in dem Fluidsammelnetz (50) entsprechen und die gegenseitigen Beziehungen zwischen verschiedenen Modellen, die verwendet werden, um die Interaktion zwischen Durchsätzen und Druck in dem Fluidsammelnetz (50) darzustellen, modellieren;
wobei die eine oder die mehreren Pseudomessungen eine Dimensionalität eines Vektors erhöhen, der alle von den relevanten Ausgangsdruckwerten sammelt, um die Bestimmung des Zustandsvektors zu ermöglichen.

2. Virtueller Durchsatzmesser nach Anspruch 1, wobei die Steuerung (18) eine auf einem Prozessor basierende Steuerung umfasst.

3. Virtueller Durchsatzmesser nach Anspruch 1, wobei die Steuerung (18) eine anwendungsspezifische integrierte Schaltung umfasst.

4. Virtueller Durchsatzmesser nach Anspruch 1, wobei die Steuerung (18) ferner konfiguriert ist, um eines oder beides von Temperaturmessungen oder Fluidratenmessungen zu erfassen.

5. Virtueller Durchsatzmesser nach Anspruch 1, wobei die eine oder die mehreren Pseudomessungen einen jeweils gleichen Druck an dem einen oder den mehreren Netzknoten umfassen.

6. Virtueller Durchsatzmesser nach Anspruch 1, wobei die Steuerung (18) ferner konfiguriert ist, um einen Druckverlust an einem oder mehreren Druckverlustsegmenten zwischen den Netzknoten zu modellieren.

7. Virtueller Durchsatzmesser nach Anspruch 6, wobei der Druckverlust an den einzelnen Druckverlustsegmenten derart modelliert wird, dass ein Auslassdruck für ein jeweiliges Druckverlustsegment eine Funktion zumindest eines Einlassdrucks für das jeweilige Druckverlustsegment und eines Durchsatzes des durch das jeweilige Druckverlustsegment fließenden Fluids ist.

8. Virtueller Durchsatzmesser nach Anspruch 1, wobei der Zustandsvektor, der Messvektor und eine oder mehrere Pseudomessungen unter Verwendung eines Kalman-Filters verarbeitet werden, um ein Ausgangssignal zu erzeugen, das verwendet wird, um den Fluss innerhalb des Fluidsammelnetzes (50) zu regulieren.

9. Virtueller Durchsatzmesser nach Anspruch 8, wobei der Kalman-Filter eines oder mehrere von Zustromleistungsbeziehungen, Druckkontinuität an Verbindungspunkten oder Massendurchsatzkontinuität innerhalb des Schätzungsrahmens berücksichtigt.

10. Verfahren zum Überwachen eines Fluidsammelnetzes (50), wobei das Verfahren umfasst:

Erzeugen oder Abrufen eines oder mehrerer Vektoren, die Massendurchsätze eines oder mehrerer Fluide durch ein Fluidsammelnetz (50) darstellen, wobei das Fluidsammelnetz (50) eine oder mehrere Quellen (A, B, C) umfasst;
Erfassen von gemessenen Druckwerten für einen oder mehrere Netzknoten (A, B, C, D, E, F) innerhalb des Fluidsammelnetzes (50), wobei die Anzahl von Netzknoten größer als die Anzahl von Quellen ist;
Bestimmen eines Zustandsvektors, der die Massendurchsätze und Druckwerte an jedem Netzknoten umfasst;
Erzeugen eines Messvektors basierend zumindest teilweise auf dem Zustandsvektor; und
Erzeugen einer diskreten Zeitdarstellung des Fluidsammelnetzes (50) basierend auf zumindest dem Zustandsvektor, dem Messvektor und einer oder mehreren Pseudomessungen, die physikalischen Zwängen in dem Fluidsammelnetz (50) entsprechen und die gegenseitigen Beziehungen zwischen verschiedenen Modellen, die verwendet werden, um die Interaktion zwischen Massendurchsätzen und Druck in dem Fluidsammelnetz (50) darzustellen, modellieren;
wobei die eine oder die mehreren Pseudomessungen eine Dimensionalität eines Vektors erhöhen, der alle von den relevanten Ausgangsdruckwerten sammelt, um die Bestimmung des Zustandsvektors zu ermöglichen.

11. Verfahren nach Anspruch 10, ferner das Erfassen von einem oder von beidem von Temperaturmessungen oder Fluidratenmessungen umfassend.

12. Verfahren nach Anspruch 10, wobei die eine oder die mehreren Pseudomessungen jeweils gleiche Drücke an dem einen oder den mehreren Netzknoten umfassen.

13. Verfahren nach Anspruch 10, ferner ein Modellieren eines Druckverlustes an einem oder mehreren Druckverlustsegmenten zwischen den Netzknoten umfassend.

14. Verfahren nach Anspruch 13, wobei der Druckverlust an jedem Druckverlustsegment derart modelliert wird, dass ein Auslassdruck für ein jeweiliges Druckverlustsegment eine Funktion zumindest eines Einlassdrucks für das jeweilige Druckverlustsegment und eines Massestroms des durch das jeweilige Druckverlustsegment fließenden Fluids ist.

15. Ein oder mehrere computerlesbare Medien, ausführbare Routinen umfassend, die, wenn sie von einem Prozessor einer Steuerung in einem virtuellen Durchsatzmesser nach einem der Ansprüche 1-9 ausgeführt werden, bewirken, dass die Verfahrensschritte nach einem der Ansprüche 10 bis 14 durchgeführt werden.

**Revendications**

1. Débitmètre virtuel, comprenant :
un contrôleur basé sur processeur (18) configuré pour :

générer ou accéder à un ou plusieurs vecteurs représentant des débits massiques d'un ou plusieurs fluides à travers un réseau de collecte de fluide (50), dans lequel le réseau de collecte de fluide (50) comprend un ou plusieurs puits (A, B, C) ;

acquérir des valeurs de pression mesurées pour un ou plusieurs nœuds (A, B, C, D, E, F) au sein du réseau de collecte de fluide (50), dans lequel le nombre de nœuds est supérieur au nombre de puits ;

déterminer un vecteur d'état comprenant les débits massiques et les valeurs de pression au niveau de chaque noeud ;

générer un vecteur de mesure en fonction au moins en partie du vecteur d'état ; et

générer une représentation temporelle distincte du réseau de collecte de fluide (50) en fonction d'au moins le vecteur d'état,

le vecteur de mesure, et une ou plusieurs pseudo-mesures

correspondant à des contraintes physiques dans le réseau de collecte de fluide (50) et qui modélisent des corrélations parmi différents modèles utilisés pour représenter l'interaction entre des débits massiques et une pression dans le réseau de collecte de fluide (50) ;

dans lequel les une ou plusieurs pseudo-mesures augmentent une dimensionnalité d'un vecteur qui recueille toutes les valeurs de pression de sortie pertinentes pour permettre une détermination du vecteur d'état •

2. Débitmètre virtuel selon la revendication 1, dans lequel le contrôleur (18) comprend un contrôleur basé sur processeur.

3. Débitmètre virtuel selon la revendication 1, dans lequel le contrôleur (18) comprend un circuit intégré spécifique à une application.

4. Débitmètre virtuel selon la revendication 1, dans lequel le contrôleur (18) est en outre configuré pour acquérir l'une ou les deux de mesures de température ou de mesures de débit de fluide.

5. Débitmètre virtuel selon la revendication 1, dans lequel les une ou plusieurs pseudo-mesures comprennent une égalité de pression au niveau des un ou plusieurs nœuds.

6. Débitmètre virtuel selon la revendication 1, dans lequel le contrôleur (18) est en outre configuré pour modéliser une perte de pression au niveau d'un ou plusieurs segments de perte de pression entre les nœuds.

7. Débitmètre virtuel selon la revendication 6, dans lequel la perte de pression au niveau de chaque segment de perte de pression est modélisée de telle sorte qu'une pression de sortie pour un segment de perte de pression respectif est une fonction au moins d'une pression d'entrée pour le segment de perte de pression respectif et d'un débit massique de fluide circulant à travers le segment de perte de pression respectif.

8. Débitmètre virtuel selon la revendication 1, dans lequel le vecteur d'état, le vecteur de mesure, et une ou plusieurs pseudo-mesures sont traités à l'aide d'un filtre de Kalman pour générer un signal de sortie utilisé pour réguler du débit au sein du réseau de collecte de fluide (50).

9. Débitmètre virtuel selon la revendication 8, dans lequel le filtre de Kalman prend en compte une ou plusieurs de relations de performance de débit d'arrivée, de continuité de pression au niveau des points de jonction, ou de continuité de débit massique au sein du cadre d'estimation.

10. Procédé pour la surveillance d'un réseau de collecte de fluide (50), le procédé comprenant :

la génération de ou l'accès à un ou plusieurs vecteurs représentant des débits massiques d'un ou plusieurs fluides à travers un réseau de collecte de fluide (50), dans lequel le réseau de collecte de fluide (50) comprend un ou plusieurs puits (A, B, C) ;

l'acquisition de valeurs de pression mesurées pour un ou plusieurs nœuds (A, B, C, D, E, F) au sein du réseau de collecte de fluide (50), dans lequel le nombre de nœuds est supérieur au nombre de puits ;

la détermination d'un vecteur d'état comprenant les débits massiques et les valeurs de pression au niveau de chaque noeud ;

la génération d'un vecteur de mesure en fonction au moins en partie du vecteur d'état ; et

la génération d'une représentation temporelle distincte du réseau de collecte de fluide (50) en fonction au moins du vecteur d'état, le vecteur de mesure, et une ou plusieurs pseudo-mesures correspondant à des contraintes physiques dans le réseau de collecte de fluide (50) et qui modélisent des corrélations parmi différents modèles utilisés pour représenter l'interaction entre des débits massiques et une pression dans le réseau de collecte de fluide (50) ;

dans lequel les une ou plusieurs pseudo-mesures augmentent une dimensionnalité d'un vecteur qui recueille toutes les valeurs de pression de sortie pertinentes pour permettre une détermination du vecteur d'état •

11. Procédé selon la revendication 10, comprenant en outre l'acquisition de l'une ou des deux des mesures de température ou mesures de débit de fluide.

12. Procédé selon la revendication 10, dans lequel les une ou plusieurs pseudo-mesures comprennent une égalité de pression au niveau des un ou plusieurs nœuds.

13. Procédé selon la revendication 10, comprenant en outre la modélisation de perte de pression au niveau d'un ou plusieurs segments de perte de pression entre les nœuds.

14. Procédé selon la revendication 13, dans lequel la perte de pression au niveau de chaque segment de perte de pression est modélisée de telle sorte qu'une pression de sortie pour un segment de perte de pression respectif est une fonction au moins d'une pression d'entrée pour le segment de perte de pression respectif et d'un débit massique de fluide circulant à travers le segment de perte de pression respectif.

15. Un ou plusieurs supports lisibles par ordinateur comprenant des routines exécutables, qui lorsqu'elles sont exécutées par un processeur d'un contrôleur dans un débitmètre virtuel selon l'une quelconque des revendications 1 à 9 amènent les étapes de procédé selon l'une quelconque des revendications 10 à 14 à être mises en œuvre.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007118346 A1